# EUROPEAN PATENT SPECIFICATION

(11) **EP 1 054 137 B1**
(45) Date of publication and mention of the grant of the patent: **23.07.2008**
(21) Application number: 00304145.6
(22) Date of filing: 17.05.2000
(51) Int. Cl.: F01D 25/26, F01D 25/28

(54) **Mounting an inner shell within an outer turbine casing**
Aufhängung eines Innengehäuses in einem äusseren Turbinengehäuse
Fixation d'un boîtier interne dans un carter extérieur d'une turbine

(30) Priority: 18.05.1999 US 313362
(43) Date of publication of application: 22.11.2000
(73) Proprietor: GENERAL ELECTRIC COMPANY, Schenectady, NY 12345 (US)
(72) Inventor: Leach, David, Simpsonville, SC 29681 (US); Bergendahl, Peter Allen, Scotia, New York 12302 (US)
(74) Representative: Goode, Ian Roy

(56) References cited:
- EP-A- 0 735 243
- CH-A- 363 661
- DE-C- 974 589
- FR-A- 1 320 174
- US-A- 2 888 240
- US-A- 3 592 557
- US-A- 5 224 825

## Description

The present invention relates generally to turbines and particularly to land-based industrial turbines for generation of electricity. More particularly, the present invention relates to a gas turbine having inner and outer turbine shells and support pins between the shells for securing the shells to one another while enabling thermal expansion and contraction in radial and axial directions.

In prior U.S. Patent No. 5,685,693 of common assignee herewith, there is illustrated an industrial gas turbine having inner and outer shells. The inner shell has a pair of axially spaced circumferential arrays of radially outwardly projecting pins terminating in reduced sections having flats on opposite circumferential sides thereof. Generally cylindrical sleeves project inwardly and about access openings in the outer shell and have threaded bolt holes extending in circumferential directions. Bolts extend through the holes to engage the flats on the sides of the pins. By adjusting the bolts, the inner shell is adjustable externally of the outer shell to locate the inner shell about the rotor axis. Reference is made to that patent for a further, more detailed description of the inner shell/ outer shell mounting arrangement. There has, however, developed a need for a more advanced mounting arrangement between the inner and outer shells in an advanced gas turbine design of assignee.

US 3,592,557 describes a device for axially fixedly and radially displaceably mounting turbine casing parts.

US 2,888,240 describes a fluid cooled barrel cylinder for turbines.

FR 1 320 174 describes an elastic fluid turbine having a one-piece internal casing.

US 5,224,825 describes a locator pin retention device for a floating joint.

Various aspects and embodiments of the present invention are defined in the appended claims.

An embodiment of the invention will now be described, by way of example, with reference to the accompanying drawings, in which:
FIGURE 1 is a fragmentary cross-sectional view of a portion of a section of a turbine incorporating a radial pin geometry according to the present invention;
FIGURE 2 is a perspective view of an inner shell with the nozzles and shrouds not shown for clarity;
FIGURE 3 is an axial schematic end view illustrating the connection between the inner and outer shells;
FIGURE 4 is an enlarged fragmentary cross-sectional view of one of the forward support pins interconnecting the outer shell and the inner shell;
FIGURES 5 and 6 are opposite end views of the support pin;
FIGURES 7 and 8 are axial and tangential views of the support pin hereof, respectively;
FIGURE 9 is a cross-sectional view of a bushing employed in a recess of the inner shell;
FIGURE 10 is an end elevational view thereof;
FIGURE 11 is a fragmentary view looking radially inwardly into an opening of the inner shell;
FIGURE 12 is a view similar to Figure 11 illustrating the bushing in the opening;
FIGURE 13 is a view similar to Figure 11 illustrating a closure plate overlying the bushing in the opening of the inner shell; and
FIGURES 14 and 15 are side and end elevational views, respectively, of a split sleeve for the bolts securing the support pin to the outer shell.

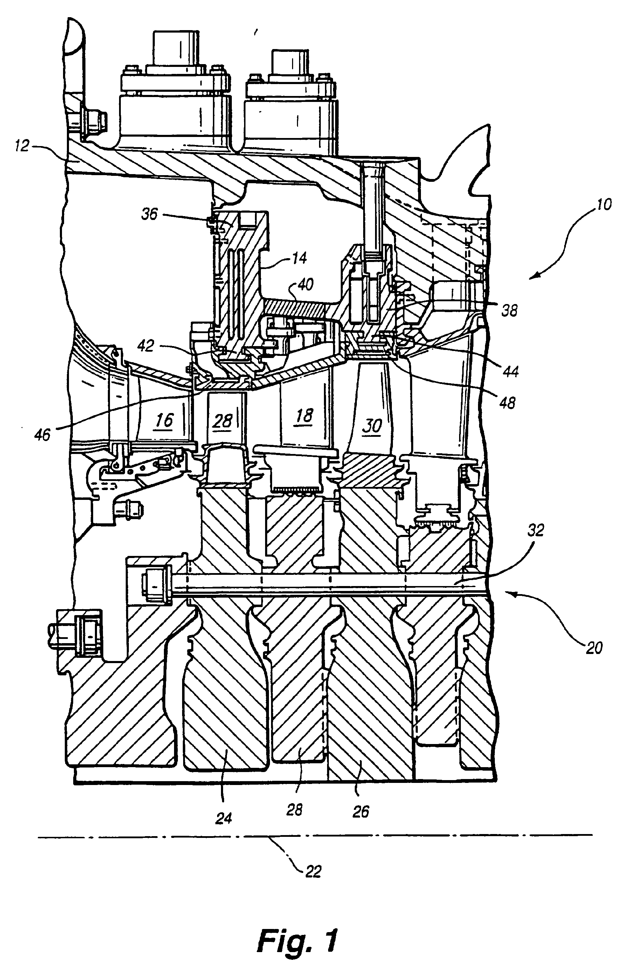

Referring to Figure 1, there is illustrated a turbine section, generally designated 10, of a turbine having an outer structural shell 12 and an inner shell 14 supported by the outer shell 12. The inner shell 14 carries an array of nozzles 16 and 18 forming parts of first and second stages, respectively, of the turbine. The inner shell 14 also surrounds a rotor, generally designated 20, rotatable about an axis 22. The rotor 20 includes circumferential arrays of buckets mounted on wheels arranged alternately with spacers, the wheels and spacers forming the body of the rotor. For example, the first and second-stage wheels 24 and 26 with an intervening spacer 28 are illustrated, the wheels 24 and 26 mounting buckets 28 and 30, respectively. It will be appreciated that the buckets and the nozzles of the various stages in part define the annular hot gas path through the turbine. The wheels and spacers of the rotor are secured to one another by bolts 32 circumferentially spaced one from the other about the rotor.

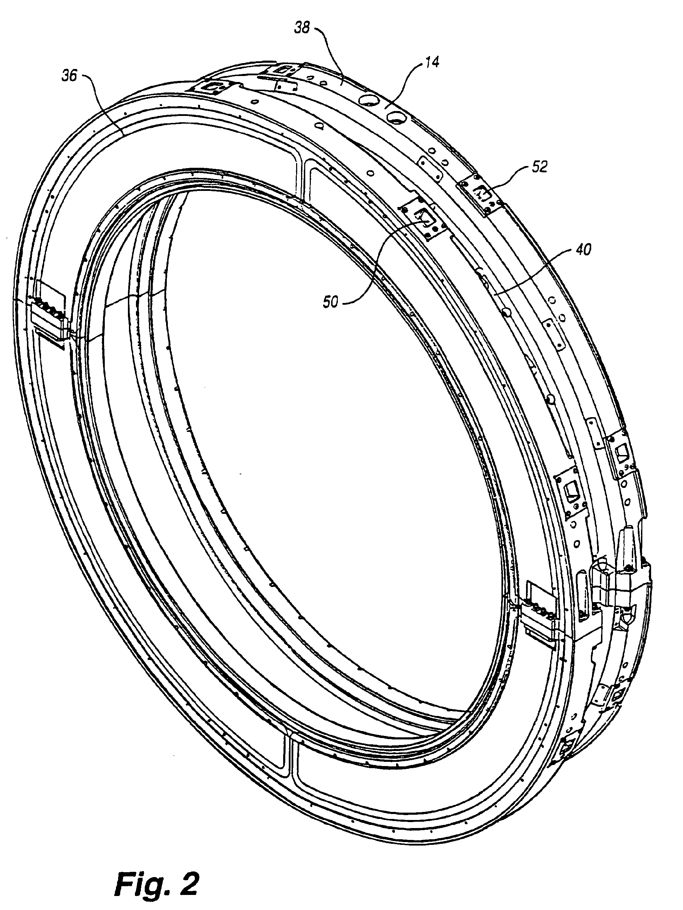

Referring to Figures 1 and 2, the inner shell 14 comprises a forward section 36 and an aft section 38 interconnected by an axially extending annular rib 40. The forward and aft sections 36 and 38 are annular and have radially inwardly directed dovetails 42 and 44, respectively, for carrying shrouds 46 and 48. The shrouds provide a minimum clearance with the tips of the buckets. It will be appreciated that the inner shell 14 is secured to the outer shell along radial planes normal to the axis of the rotor and at axial locations, preferably in alignment with the first and second-stage buckets and shrouds.

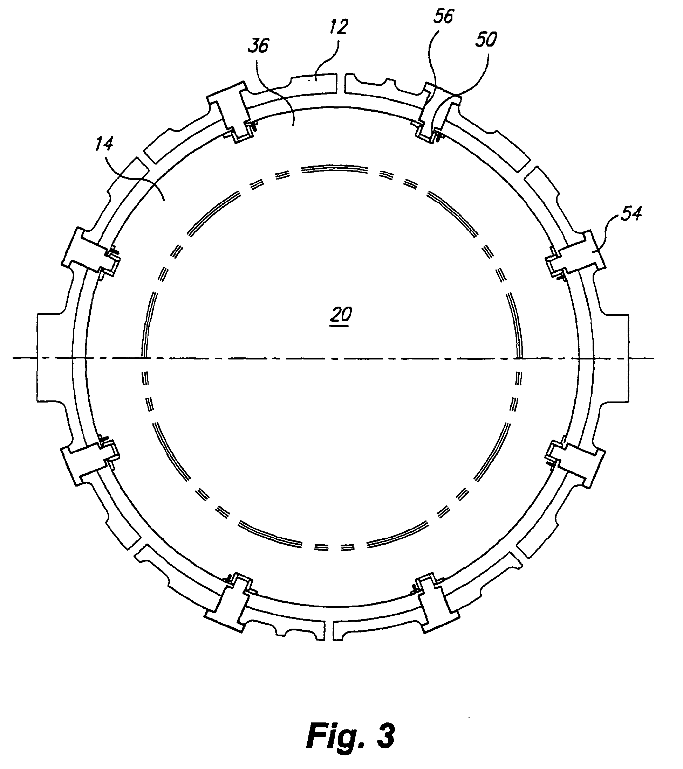

To connect the inner and outer shells to one another, each of the forward and aft sections 36 and 38, respectively, of the inner shell 14 are provided with circumferentially spaced recesses 50 and 52. As illustrated in Figure 3, connecting elements, e.g., support pins 54 pass through access openings 56 through the outer shell for connection with the forward section 36 of inner shell 14. Similar pins interconnect the outer shell 12 with the aft section 38 of inner shell 14. Preferably, the pins lie at eight pin locations in each radial plane and are spaced approximately 45° one from the other about the rotor axis. The support pins 54 are also spaced from the horizontal splitline of the inner shell.

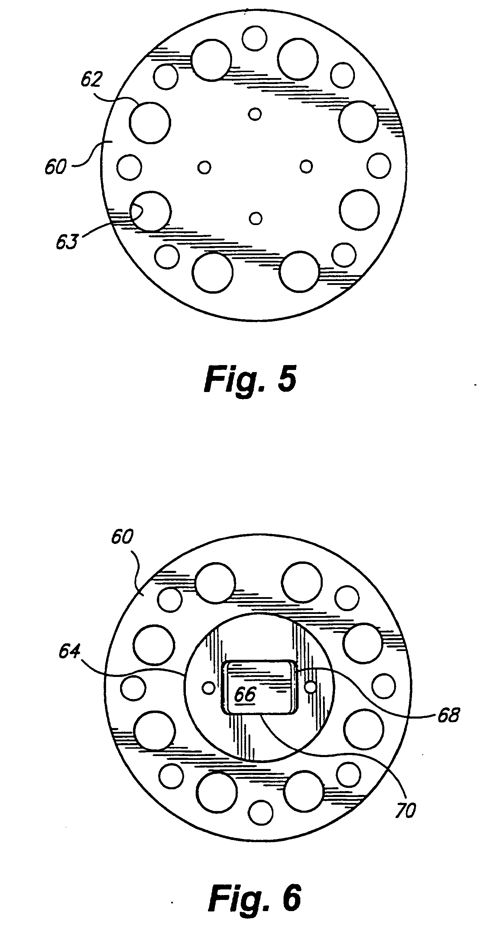

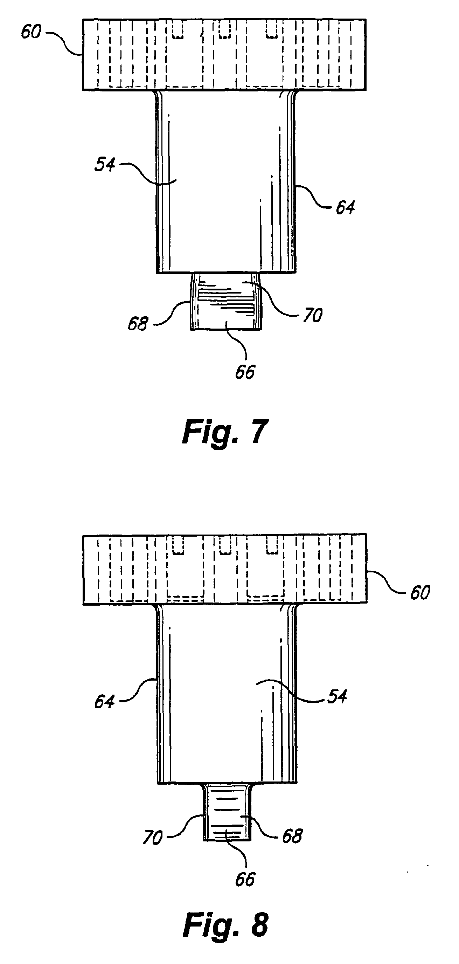

Referring to Figures 5-8, the support pins 54 include an enlarged head 60 having a bolt circle 62 (Figure 5) with a purality of bolt openings 63, a generally cylindrical shank 64 and a reduced projection 66 on the radial innermost end of the support pin. Each of the opposite circumferentially facing sides 68 of the projections 66 has an arcuate surface. The arcuate surface of each side 68 is a portion of a cylindrical surface about an axis extending generally parallel to the axis of the rotor. Thus, the sides 68 face in a tangential direction. The forward and aft end faces 70 of the projection 66 face in axial opposite directions and are flat.

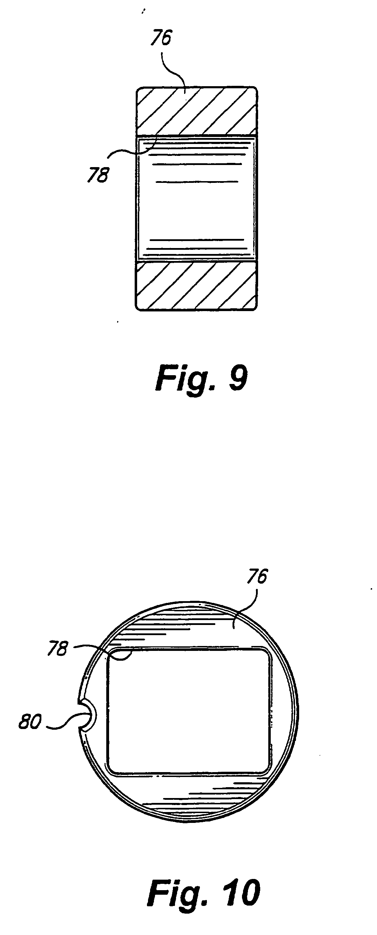

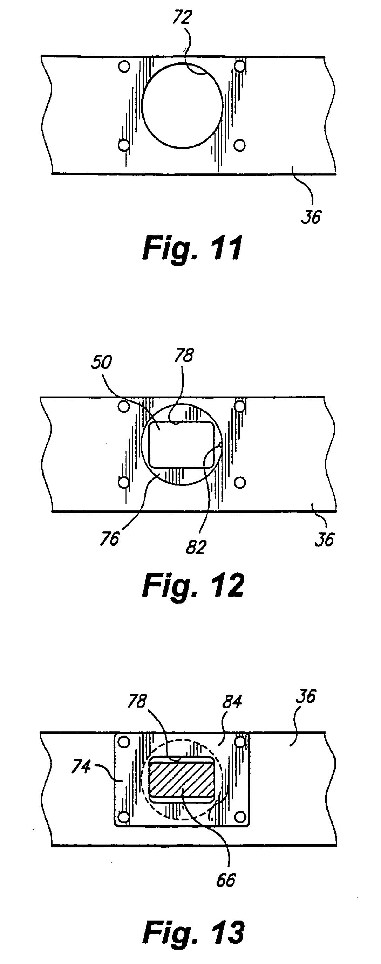

To form the recesses 50 and 52 in the inner shell 14, there is illustrated in Figure 11 in a preferred embodiment hereof a circular aperture disposed at spaced circumferential locations about each of the forward and aft sections of the inner shell on centerlines coincident with the centerlines of the recesses 50 and 52, respectively. Only one such forward or aft section of the inner shell is illustrated, e.g., the forward section 36, the apertures 72 being cut into the rims. Circular cast bushings 76 (Figures 9 and 10) are inserted into the circular apertures 72 (Figure 12). Each cast bushing 76 has a rectilinear opening 78 therethrough forming the major portion of the recess 50 into which the projections 66 of the support pins are received. The rectilinear openings 78 of the bushings 76 are preferably formed by an EDM process but other processes may be used. The long sides of the rectilinear openings in the bushings face axially, while the short sides face tangentially. To accommodate and ensure this orientation, the bushings 76 are keyed into the aperture 72, for example, by a recess 80 (Figure 10) and a complementary projection 82 (Figure 12) formed along the arcuate surface of the bushing and the inside surface of aperture 72. To complete each recess, a cover plate 84 (Figure 13) having a corresponding rectilinear opening as said bushing overlies each bushing 76 and aperture 72.

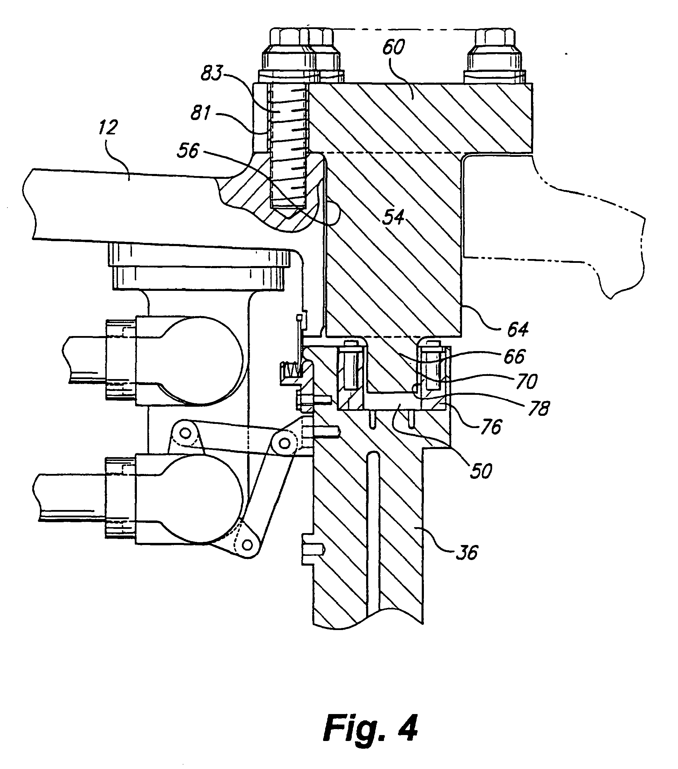

From a review of Figure 4, it will be appreciated that the support pins 54 are inserted through the access openings of the outer shell and received within the recesses 50 or 52 as applicable, the forward section 36 and one of recesses 50 being illustrated. The arcuate sides 68 of the projections 66 at the radially inner ends of the support pins bear in line contact along the short sides of the rectilinear opening 78 in the bushing 76. The line contact extends in an axial direction. Thus, it will be appreciated that a closely toleranced fit is provided between the arcuate sides 68 of the projections and the side walls of the rectilinear openings of the bushings. The end faces 70 of each projection 66 are spaced axially from the long axially registering faces of the rectilinear opening 78 of bushing 76. Thus, a substantial clearance is provided in opposite axial directions between the projection of the support pin and the end faces of the rectilinear opening of the bushing. The clearances between the projections 66 of the aft support pins and the end faces of the rectilinear openings in the bushings in the aft portion of the inner shell may be less than the corresponding clearances between the projections and the openings of the forward inner shell portion. The clearances in the axial direction are provided to accommodate axial expansion and contraction of the inner shell relative to the outer shell. Consequently, by providing the axial clearance between the projections and the walls of the bushing openings and with the aft face of the inner shell butting a forward face of the stage 3 nozzle hangar, the magnitude of the axial expansion or contraction will be greater the further forward the inner shell lies from its abutment with the axial facing of the flat surface of the third-stage nozzle hangar.

It will be appreciated that the foregoing arrangement of the support pins enables the inner shell to thermally expand and contract in both radial and axial directions while maintaining concentricity about the rotor axis. That is, the inner shell 14 may expand radially outwardly relative to the outer shell 12 as the inner shell heats up to a predetermined temperature at steady-state operation. Similarly, upon shutdown of the turbine, the inner shell cools and contracts relative to the outer shell. Significantly, with the foregoing-described arrangement of the pins and their configuration, neither radial nor axial loadings are taken up by the pins. Only tangential loadings including aerodynamic loadings are taken up by the pins. Also, the pin arrangement maintains concentricity of the inner shell relative to the outer shell and to the axis of the rotor. Further, because the recesses 50 and 52 are larger in axial dimension than the axial dimension of the projections 66 and the projections are located intermediate the recesses 50 and 52, differential growth of the inner shell in an axial direction, i.e., in thermal response to the operation of the turbine, is not taken up by the support pins. With the inner shell butting the stage 3 nozzle hanger at its aft end, the inner shell is free for axial thermal expansion in a forward direction. It will be appreciated that the line contact between the circumferential sides of the projections and the walls of the recesses enable radial movement of the inner shell relative to the outer shell and their spacing in fore and aft directions from the end walls of the recesses enables axial thermal growth. A greater axial spacing is provided between the pins and the end faces of the recesses of the forward section of the inner shell than on the aft portion of the inner shell because of the greater differential growth along forward portions of the inner shell.

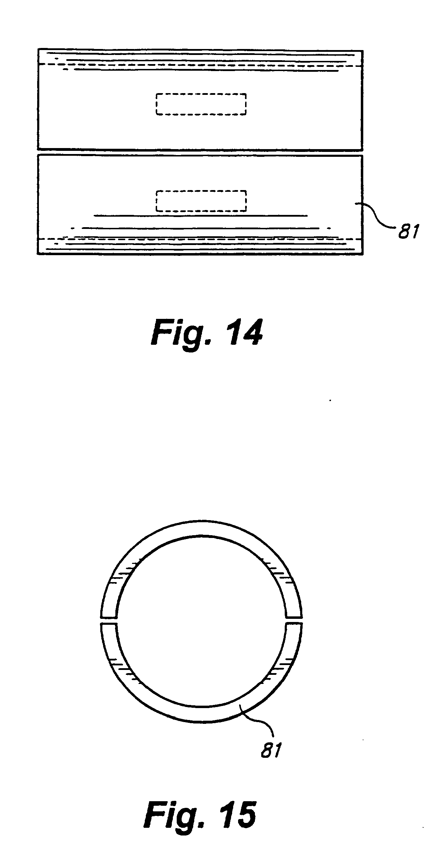

Additionally, and referring to Figures 14, 15 and 4, the support pins have shanks which are smaller in diameter than the bolt hole openings to accommodate slight misalignment between the inner and outer shells. The clamping action, therefore, is taken out between the head of the support pin and the underlying flange of the outer shell surrounding the outer shell opening and which receives the bolts of the bolt circle. To assist in preventing the support pin head 60 from moving relative to the outer shell and not rely totally on frictional forces between the support pin and outer shell, a split sleeve 81 which acts like a shear dowel is provided about two or more of the bolts passing through the bolt circle. A split sleeve is illustrated in Figures 14 and 15 at 81 and surrounds the shanks of the bolts 83 (Figure 4) in the bolt circle openings 63, affording higher shear capability. Additionally, hard facing material is welded, preferably by a TIG weld process, to the cylindrical side of the pin head to bear against the stellite bushing, rendering the material at the joint of the support pins and the outer shell extremely hard.

Further, it will be appreciated from a review of Figures 5 and 6, that there are a series of offset holes in the bolt head which indicate orientation of the pins upon installation. That is, it is important to orient the pin such that the arcuate sides of the pin projections lie in a radial plane.

## Claims

1. A turbine comprising:
an outer structural shell (12);
an inner shell (14) connected to and surrounded by said outer shell in generally concentric relation therewith, said inner shell carrying nozzles (16, 18) and shrouds (46, 48) for a turbine stage, said shrouds surrounding tips of buckets (28, 30) carried by a turbine rotor (20) within said inner shell;
a plurality of connecting elements (54) engaging between said inner and outer shells aligning said inner shell about the rotor, said connecting elements engaging said inner shell with a clearance in an axial direction of said rotor to enable differential growth of said inner shell relative to said outer shell in an axial direction while maintaining concentricity of said inner shell about said rotor; **characterized in that**:
connecting elements (54) comprise opposite facing sides (68), each facing side (68) having an arcuate surface which is a portion of a cylindrical surface whose axis extends generally parallel to the axis of the rotor, such that said connecting elements (54) engage said inner shell (14) and carry tangential loads without carrying substantial radial or axial loads.

2. A turbine according to Claim 1 wherein said inner shell has a plurality of recesses (50, 52) spaced circumferentially thereabout receiving portions of said connecting elements.

3. A turbine according to Claim 1 wherein said connecting elements have circumferentially facing arcuate sides (68) engaging said inner shell along and forming line contacts therewith.

4. A turbine according to Claim 1 wherein said connecting elements have circumferential facing side faces each formed by a curve about the axis parallel to the axial direction of said rotor.

5. A turbine according to Claim 1 wherein said connecting elements have circumferential facing sides each formed by a surface portion of a cylinder having the axis parallel to the axial direction of said rotor.

6. A turbine according to Claim 1 wherein said inner shell comprises forward and aft shell sections, each of said forward and aft shell sections being engaged by circumferentially spaced connecting elements of said plurality thereof for aligning said inner shell about the rotor.

7. A turbine according to Claim 6 wherein the connecting elements connecting between said outer shell and said forward shell section have a greater clearance with said inner shell in an axial direction than a clearance between said connecting elements and said aft inner shell section in said axial direction.

8. A turbine according to Claim 1 wherein said inner shell has a plurality of generally rectilinear recesses (50, 52) spaced circumferentially thereabout and opening radially outwardly, said connecting elements including radially inwardly directed projections (66) having generally rectilinear cross-sections for engaging in said recesses, at least one of the long edges of said recess and an adjacent long edge of said projection being spaced from one another in the direction of the axis of the rotor.

9. A turbine according to Claim 8 wherein said projections have circumferentially facing arcuate side faces (68) engaging said inner shell and forming line contacts therewith.

10. A turbine according to Claim 1 wherein each said connecting element includes a bolt circle (62) having a plurality of bolt openings (63) for receiving bolts (83) for securing said element to said outer shell, at least one of said bolts including a split sleeve (81) thereabout and through a corresponding opening in said bolt circle.

11. A turbine according to Claim 1 wherein said inner shell has a plurality of generally circular apertures (72) spaced circumferentially thereabout and opening radially outwardly, generally circular bushings (76) disposed in said circular apertures, each of said bushings having a generally rectilinear opening (78) therein forming said recess for receiving a connecting element.

## Patentansprüche

1. Turbine, aufweisend:
ein äußeres tragendes Gehäuse (12);
ein inneres Gehäuse (14), das mit dem äußeren Gehäuse in im Wesentlichen konzentrischer Beziehung verbunden und von diesem umgeben ist, wobei das innere Gehäuse Düsen (16, 18) und Deckbänder (46, 48) für eine Turbinenstufe trägt, wobei die Deckbänder Spitzen von Schaufeln (28, 30) umgeben, die von einem Turbinenrotor (20) in dem Innengehäuse gelagert werden;
mehrere Verbindungselemente (54) in Eingriff zwischen dem inneren und äußeren Gehäuse, die das innere Gehäuse um den Rotor herum ausrichten, wobei die Verbindungselemente das innere Gehäuse mit einem Abstand in einer axialen Richtung des Rotors in Eingriff bringen, um eine unterschiedliche Zunahme des inneren Gehäuses in Bezug auf das äußere Gehäuse in einer axialen Richtung unter Beibehaltung der Konzentrizität des inneren Gehäuses um den Rotor herum zu ermöglichen;
**dadurch gekennzeichnet, dass**
die Verbindungselemente (54) gegenüberliegende Auflageseiten (68) aufweisen, wobei jede Auflageseite (68) eine gekrümmte Oberfläche besitzt, welche ein Abschnitt einer zylindrischen Oberfläche ist, deren Achse sich im Wesentlichen parallel zu der Achse des Rotors erstreckt, so dass die Verbindungselemente (54) mit dem inneren Gehäuse (14) in Eingriff stehen und tangentiale Lasten tragen, ohne im Wesentlichen radiale oder axiale Lasten zu tragen.

2. Turbine nach Anspruch 1, wobei das innere Gehäuse mehrere in Umfangsrichtung herum in Abstand angeordnete Aussparungen (50, 52) hat, die Abschnitte der Verbindungselemente aufnehmen.

3. Turbine nach Anspruch 1, wobei die Verbindungselemente in Umfangsrichtung zeigende gekrümmte Seiten (68) haben, die mit dem inneren Gehäuse daran entlang in Eingriff stehen und Linienkontakte damit ausbilden.

4. Turbine nach Anspruch 1, wobei die Verbindungselemente in Umfangsrichtung zeigende Seitenflächen besitzen, welche jeweils durch eine Kurve um die Achse parallel zu der axialen Richtung des Rotors ausgebildet sind.

5. Turbine nach Anspruch 1, wobei die Verbindungselemente in Umfangsrichtung zeigende Seiten haben, welche jeweils durch einen Oberflächenabschnitt eines Zylinders mit der Achse parallel zu der axialen Richtung des Rotors ausgebildet sind.

6. Turbine nach Anspruch 1, wobei das innere Gehäuse vordere und hintere Gehäuseabschnitte aufweist, wobei jeder von den vorderen und hinteren Gehäuseabschnitten mit mehreren in Umfangsrichtung beabstandeten Verbindungselementen zum Ausrichten des inneren Gehäuses um den Rotor in Eingriff stehen.

7. Turbine nach Anspruch 6, wobei die eine Verbindung zwischen dem äußeren Gehäuse und dem vorderen Gehäuseabschnitt herstellenden Verbindungselemente einen größeren Abstand zu dem inneren Gehäuse in einer axialen Richtung als einen Abstand zwischen den Verbindungselementen und dem hinteren Gehäuseabschnitt in der axialen Richtung haben.

8. Turbine nach Anspruch 1, wobei das innere Gehäuse mehrere im Wesentlichen geradlinige Aussparungen (50, 52) aufweist, die in Umfangsrichtung darum herum in Abstand angeordnet sind und sich radial nach außen öffnen, wobei die Verbindungselemente radial nach innen gerichtete Vorsprünge (66) mit im Wesentlichen geradlinigen Querschnitten für einen Eingriff in die Aussparungen enthalten, wobei wenigstens eine von den langen Kanten in der Aussparung und eine benachbarte lange Kante des Vorsprungs voneinander in der Richtung der Achse des Rotors beabstandet sind.

9. Turbine nach Anspruch 8, wobei die Vorsprünge in Umfangsrichtung zeigende gekrümmte Seitenflächen (68) haben, die mit dem inneren Gehäuse in Eingriff stehen und Linienkontakte damit ausbilden.

10. Turbine nach Anspruch 1, wobei jedes einzelne Verbindungselement einen Schraubenkreis (62) mit mehreren Schraubenöffnungen (63) zum Aufnehmen von Schrauben (83) für die Befestigung des Elementes an dem äußeren Gehäuse enthält, wobei wenigstens eine von den Schrauben eine Spannhülse (81) um sie herum und durch eine entsprechende Öffnung in dem Schraubenkreis enthält.

11. Turbine nach Anspruch 1, wobei das innere Gehäuse mehrere im Wesentlichen runde Öffnungen (72) enthält, die in Umfangsrichtung darum herum in Abstand angeordnet sind und sich radial nach außen öffnen, und im Wesentlichen runde Buchsen (76), die in den runden Öffnungen angeordnet sind, wobei jede von den Buchsen im Wesentlichen eine gerade Öffnung (78) besitzt, die die Aussparung zur Aufnahme eines Verbindungselementes ausbildet.

## Revendications

1. Turbine comprenant :
une enveloppe structurelle externe (12);
une enveloppe interne (14) reliée à ladite enveloppe externe et entourée par celle-ci dans une relation généralement concentrique avec celle-ci, ladite enveloppe interne portant des tuyères (16, 18) et des anneaux (46, 48) de renforcement pour un étage de turbine, lesdits anneaux de renforcement entourant des extrémités d'ailettes (28, 30) portées par un rotor (20) de turbine dans ladite enveloppe interne ;
une pluralité d'éléments (54) de liaison s'engageant entre lesdites enveloppes interne et externe alignant ladite enveloppe interne sur le rotor, lesdits éléments de liaison s'engageant dans ladite enveloppe interne avec un espace libre dans un sens axial dudit rotor pour permettre une expansion différentielle de ladite enveloppe interne par rapport à ladite enveloppe externe dans un sens axial tout en maintenant la concentricité de ladite enveloppe interne par rapport audit rotor ; **caractérisée en ce que** :
les éléments (54) de liaison comprennent des côtés opposés (68), chaque côté opposé (68) comportant une surface arquée constituant une partie d'une surface cylindrique dont l'axe s'étend généralement en parallèle à l'axe du rotor, de sorte que lesdits éléments (54) de liaison s'engagent dans ladite enveloppe interne (14) et portent des charges tangentielles sans porter de charges radiales ou axiales importantes.

2. Turbine selon la revendication 1 dans laquelle ladite enveloppe interne possède une pluralité d'évidements (50, 52), espacés de manière circonférentielle sur celle-ci, recevant des parties desdits éléments de liaison.

3. Turbine selon la revendication 1 dans laquelle lesdits éléments de liaison possèdent des côtés arqués opposés circonférentiels (68) s'engageant le long de ladite enveloppe interne et formant des contacts linéaires avec celle-ci.

4. Turbine selon la revendication 1 dans laquelle lesdits éléments de liaison possèdent des faces latérales opposées circonférentielles formées d'une courbe selon l'axe parallèle au sens axial dudit rotor.

5. Turbine selon la revendication 1 dans laquelle lesdits éléments de liaison possèdent des cotés opposés circonférentiels formés chacun d'une partie de surface d'un cylindre ayant l'axe parallèle au sens axial dudit rotor.

6. Turbine selon la revendication 1 dans laquelle ladite enveloppe interne comprend des sections d'enveloppe avant et arrière, chacune desdites sections d'enveloppe avant et arrière recevant des éléments de liaison espacés de manière circonférentielle de ladite pluralité de ceux-ci pour aligner ladite enveloppe interne sur le rotor.

7. Turbine selon la revendication 6 dans laquelle les éléments de liaison reliant ladite enveloppe externe et ladite section d'enveloppe avant présentent un espace libre plus important avec ladite enveloppe interne dans un sens axial qu'un espace libre entre lesdits éléments de liaison et ladite section d'enveloppe interne arrière dans ledit sens axial.

8. Turbine selon la revendication 1 dans laquelle ladite enveloppe interne possède une pluralité d'évidements (50, 52) généralement rectilinéaires espacés de manière circonférentielle sur celle-ci et s'ouvrant radialement vers l'extérieur, lesdits éléments de liaison incluant des saillies (66) dirigées radialement vers l'intérieur comportant des sections transversales généralement rectilinéaires pour s'engager dans lesdits évidements, au moins un des bords longs dudit évidement et un bord long adjacent de ladite saillie étant espacés l'un de l'autre dans le sens de l'axe du rotor.

9. Turbine selon la revendication 8 dans laquelle lesdites saillies possèdent des faces latérales arquées opposées circonférentielles (68) s'engageant dans ladite enveloppe interne et formant des contacts linéaires avec celle-ci.

10. Turbine selon la revendication 1 dans laquelle chacun desdits éléments de liaison comprend un cercle (62) de boulonnage doté d'une pluralité d'ouvertures (63) pour boulons pour recevoir des boulons (83) afin de fixer ledit élément à ladite enveloppe externe, au moins un desdits boulons incluant un manchon (81) en deux pièces sur celui-ci et dans une ouverture correspondante dans ledit cercle de boulonnage.

11. Turbine selon la revendication 1 dans laquelle ladite enveloppe interne possède une pluralité d'ouvertures (72) généralement circulaires espacées de manière circonférentielle sur celle-ci et s'ouvrant radialement vers l'extérieur, des douilles (76) généralement circulaires disposées dans lesdites ouvertures circulaires, chacune desdites douilles comportant une ouverture (78) généralement rectilinéaire dans celle-ci formant ledit évidement pour recevoir un élément de liaison.
